# EUROPÄISCHE PATENTSCHRIFT

(11) **EP 2 776 304 B1**
(45) Veröffentlichungstag und Bekanntmachung des Hinweises auf die Patenterteilung: **07.09.2016**
(21) Anmeldenummer: 12786955.0
(22) Anmeldetag: 08.11.2012
(51) Int. Cl.: B62D 15/02, B60W 30/06, B60W 30/095, B60W 30/09

(54) **VERFAHREN ZUR UNTERSTÜTZUNG EINES FAHRERS EINES KRAFTFAHRZEUGS SOWIE VORRICHTUNG ZUR DURCHFÜHRUNG DES VERFAHRENS**
METHOD FOR SUPPORTING A DRIVER OF A MOTOR VEHICLE AND DEVICE FOR PERFORMING THE METHOD
PROCÉDÉ D'ASSISTANCE D'UN CONDUCTEUR D'UN VÉHICULE À MOTEUR ET DISPOSITIF POUR LA MISE EN OEUVRE DU PROCÉDÉ

(30) Priorität: 11.11.2011 DE 102011086210
(43) Veröffentlichungstag der Anmeldung: 17.09.2014
(73) Patentinhaber: Robert Bosch GmbH, 70442 Stuttgart (DE)
(72) Erfinder: Raisch, Florian, 71116 Gaertringen (DE); Huebner, Hans-Peter, 70599 Stuttgart (DE)
(86) Internationale Anmeldenummer: PCT/EP2012/072108
(87) Internationale Veröffentlichungsnummer: WO 2013/068444

(56) Entgegenhaltungen:
- EP-A1- 2 327 574
- EP-A2- 1 447 271
- EP-A2- 2 050 640
- WO-A1-2011/016367
- DE-A1-102004 029 985
- DE-A1-102009 029 456
- DE-A1-102009 046 674
- DE-A1-102010 002 105

## Beschreibung

### Stand der Technik

Die Erfindung betrifft ein Verfahren zur Unterstützung eines Fahrers eines Kraftfahrzeugs bei einem Fahrmanöver. Weiterhin betrifft die Erfindung eine Vorrichtung zur Durchführung des Verfahrens.

Zur Unterstützung des Fahrers eines Kraftfahrzeugs bei einem Fahrmanöver sind bereits unterschiedliche Verfahren und Fahrassistenzsysteme am Markt erhältlich. Insbesondere sind Fahrassistenzsysteme bekannt, die den Fahrer bei langsamen Fahrmanövern, zum Beispiel beim Einparken des Fahrzeugs unterstützen. Hierbei wird unterschieden in Systeme, die den Fahrer über Abstände zu Objekten in der Umgebung des Fahrzeugs informieren, so dass dieser bei Annäherung an ein Objekt die Geschwindigkeit des Fahrzeugs reduzieren und bei Bedarf das Fahrzeug anhalten kann, und in semiautomatische und automatische Systeme.

Bei semiautomatischen Fahrassistenzsystemen wird die Umgebung des Kraftfahrzeugs erfasst, eine Trajektorie zur Durchführung des Fahrmanövers berechnet und dem Fahrer werden Lenkhinweise gegeben. Die Längsführung und die Querführung obliegt dabei jedoch weiterhin dem Fahrer des Kraftfahrzeugs. Weiterhin sind auch Systeme bekannt, bei denen entweder nur die Längsführung oder nur die Querführung automatisch vom Fahrassistenzsystem durchgeführt werden. Hierbei werden bei einem System, bei dem die Querführung dem Fahrer obliegt, Hinweise zu Lenkeinschlägen gegeben. Bei einem System, bei dem dem Fahrer die Längsführung obliegt, werden Hinweise zum Abbremsen und zum Wechsel von Vorwärts- und Rückwärtsfahrten gegeben.

Bei automatischen Systemen wird ebenfalls die Umgebung des Kraftfahrzeugs erfasst, eine Trajektorie zur Durchführung des Fahrmanövers berechnet und das Fahrmanöver vom Fahrassistenzsystem selbsttätig sowohl hinsichtlich Längsführung als auch Querführung durchgeführt.

Unabhängig von der Art der Unterstützung ist es notwendig, dass der Fahrer das Fahrmanöver bei seiner Durchführung überwacht und gegebenenfalls eingreift, indem dieser zum Beispiel das Fahrmanöver abbricht, wenn sich ein Objekt im Fahrschlauch befindet, das beispielsweise vom Fahrassistenzsystem nicht erkannt worden ist oder wenn sich ein sich bewegendes Objekt in den Fahrschlauch bewegt. Alternativ kann der Fahrer auch die Steuerung wieder übernehmen, indem dieser zum Beispiel einen vom zur Durchführung des Fahrmanövers vorgegebenen Lenkeinschlag abweichenden Lenkeinschlag einstellt, um beispielsweise ein mögliches Hindernis zu umfahren.

Aus DE 103 24 810 A1 ist ein Verfahren zur Unterstützung eines Fahrers eines Kraftfahrzeugs bei einem Einparkvorgang bekannt. Hierbei wird die Querführung des Fahrzeugs automatisch übernommen. Durch Betätigung des Lenkrades durch den Fahrer wird die vorgegebene Querführung übersteuert und der automatische Einparkvorgang abgebrochen. Nachteil bei dem aus dem Stand der Technik bekannten Verfahren ist, dass eine Übersteuerung des Fahrers das Fahrmanöver jeweils abgebrochen wird. Eine Fortsetzung des Fahrmanövers, wenn sich zum Beispiel das Objekt aus dem Fahrschlauch bewegt, ist nicht möglich. Auch wird grundsätzlich das Fahrmanöver abgebrochen, eine Fortsetzung des Fahrmanövers zum Beispiel mit einer verringerten Geschwindigkeit ist ebenfalls nicht vorgesehen. Aus DE 10 2009 029 456 A1 ist ein Verfahren zur Unterstützung eines Einparkvorganges eines Kraftfahrzeugs bekannt, wobei während des Einparkvorganges der Abstand zu mindestens einem Objekt, das den Parkraum begrenzt und/oder sich in der zum Einparken vorgesehenen Bahn befindet, detektiert wird. Das Fahrzeug wird bei Unterschreiten eines vorgegebenen Abstandes oder einer vorgegebenen Time-to-collision (TTC) zu dem zumindest einen Objekt automatisch zum Stillstand gebracht. Ein Abbrechen eines Einparkmanövers erfolgt, wenn sich ein bewegendes Objekt auf Kollisionskurs befindet, d.h. in der vorgesehenen Bahn detektiert wird. Hierfür wird für das Objekt ein Bewegungsmuster durch wiederholte Abstandsmessungen ermittelt. Basierend auf dem Bewegungsmuster erfolgt nur dann ein Abbremsen, wenn eine Kollision mit dem sich bewegenden Objekt nicht auszuschließen ist. Der nächstliegende Stand der Technik ist in der DE 10 2009 029 456 A1 zu sehen.

### Offenbarung der Erfindung

### Vorteile der Erfindung

Erfindungsgemäß wird ein Verfahren zur Unterstützung eines Fahrers eines Kraftfahrzeugs bei einen Fahrmanöver vorgeschlagen, das folgende Schritte umfasst:
(a) Bestimmung eines Fahrschlauchs, in dem sich das Kraftfahrzeug während der Durchführung des Fahrmanövers bewegt und automatisches oder semiautomatisches Durchführen des Fahrmanövers,
(b) Erfassen der Umgebung des Kraftfahrzeugs während des Fahrmanövers,
(c) Anhalten des Kraftfahrzeugs, wenn ein Objekt im Fahrschlauch erfasst wird und Fortsetzen des Fahrmanövers, sobald das Objekt den Fahrschlauch verlassen hat und/oder Abbremsen des Kraftfahrzeugs und langsames Fortsetzen des Fahrmanövers, wenn ein Objekt außerhalb des Fahrschlauchs detektiert wird.

Durch das erfindungsgemäße Verfahren wird der Fahrer bei Fahrmanövern unterstützt, ohne dass das Fahrmanöver zum Beispiel bei Detektion eines Objektes in der Nähe abgebrochen wird. Insbesondere ist es vorteilhaft, dass das Fahrmanöver fortgesetzt wird, wenn sich das detektierte Objekt nicht im Fahrschlauch befindet. Der Fahrer erhält somit auch eine Unterstützung, wenn sich ein Objekt zwar in der Nähe des Fahrzeugs befindet, jedoch das Fahrmanöver nicht behindert. Ein weiterer Vorteil ist, dass das Fahrmanöver bei Detektion eines Objekts im Fahrschlauch lediglich unterbrochen und nicht beendet wird. Wenn sich das im Fahrschlauch befindliche Objekt weiterbewegt und den Fahrschlauch wieder verlässt, wird das Fahrmanöver fortgeführt.

In einer Ausführungsform der Erfindung wird das automatisch durchgeführte Fahrmanöver abgebrochen, sobald der Fahrer des Kraftfahrzeugs das Fahrpedal betätigt. Durch Betätigung des Fahrpedals wird zunächst das Fahrzeug beschleunigt. Dies führt im Allgemeinen dazu, dass die Geschwindigkeit des Kraftfahrzeugs auf eine Geschwindigkeit erhöht wird, die zur Fortsetzung des automatisch durchgeführten Fahrmanövers zu groß ist. Zudem wird hierdurch die Möglichkeit gegeben, dass der Fahrer zum Beispiel bei einer Planänderung das System überstimmen kann und das Fahrmanöver abgebrochen werden kann.

Weiterhin ist es bevorzugt, dass das Fahrmanöver nicht abgebrochen wird, wenn die Geschwindigkeit des Kraftfahrzeugs verringert wird. Bei aus dem Stand der Technik bekannten Fahrassistenzsystemen wird im Allgemeinen bei Betätigung der Bremse des Kraftfahrzeugs durch den Fahrer das Fahrmanöver abgebrochen. Eine Verringerung der Geschwindigkeit kann jedoch zum Beispiel auch dann erforderlich sein, wenn sich in der Umgebung des Fahrzeugs ein Objekt befindet, zum Beispiel ein bewegliches Objekt, das den geplanten Fahrschlauch kreuzt. In diesem Fall ist es zum Beispiel notwendig, die Geschwindigkeit des Fahrmanövers zu verringern, ein Abbruch ist jedoch nicht erforderlich. Wenn das Objekt durch das System nicht korrekt erfasst wird, wird somit dem Fahrer die Möglichkeit gegeben, die Geschwindigkeit zu verringern, ohne das Fahrmanöver abzubrechen. In einer bevorzugten Ausführungsform ist es hierbei möglich, dass der Fahrer das Fahrzeug bis zum Stillstand abbremst, nach dem Loslösen der Bremse das Fahrmanöver jedoch wieder fortgeführt wird.

Ein Abbruch des Fahrmanövers ist zum Beispiel möglich, indem ein entsprechender Funktionsschalter betätigt wird.

Das erfindungsgemäße Verfahren kann sowohl bei automatischen Systemen als auch bei semiautomatischen Systemen zur Anwendung gelangen. Bei einem automatischen System wird das Fahrmanöver automatisch durch das Fahrassistenzsystem durchgeführt. Hierbei steuert das Fahrassistenzsystem Längsführung, das heißt Beschleunigen und Abbremsen des Fahrzeuges, und Querführung, das heißt Lenkbewegungen, automatisch. Bei einem semiautomatischen System ist es zum Beispiel möglich, dass die Längsführung automatisch erfolgt und dass der Fahrer des Kraftfahrzeugs Hinweise zur Querführung erhält. Alternativ ist es auch möglich, dass dem Fahrer die Längsführung obliegt und die Querführung automatisch durchgeführt wird. Wenn dem Fahrer die Längsführung des Fahrzeugs obliegt, führt insbesondere ein starkes Beschleunigen zum Abbruch des automatischen Fahrmanövers.

Die Hinweise zur Lenkung, wenn das Fahrmanöver semiautomatisch durchgeführt wird, können zum Beispiel akustisch, optisch oder haptisch erfolgen. Bei akustischen Hinweisen ist es zum Beispiel möglich, durch ein Sprachausgabesystem dem Fahrer Hinweise zum notwendigen Einlenken des Fahrzeugs zu geben. Bei einem optischen System können dem Fahrer durch eine grafische Anzeige Hinweise zum entsprechenden Lenkeinschlag gegeben werden. So ist es zum Beispiel möglich, dass durch eine Pfeildarstellung angezeigt wird, in welche Richtung das Lenkrad zu bewegen ist und durch ein Aufblinken oder ein Ausblenden des Pfeiles dargestellt wird, dass das Lenkrad nicht weiter zu bewegen ist. Besonders bevorzugt ist es jedoch, wenn dem Fahrer die Hinweise zur Querführung haptisch gegeben werden. Hierzu ist es zum Beispiel möglich, das dem Lenkrad ein Moment aufgegeben wird, das den Fahrer veranlasst zu lenken. Hierbei ist es zum Beispiel möglich, dass ein Gefühl erzeugt wird, als ob sich das Fahrzeug in einer Spurrille bewegt. Um das Fahrzeug in eine Richtung zu lenken, die vom Fahrassistenzsystem nicht vorgesehen ist, muss eine erhöhte Kraft aufgebracht werden. Dies kann in einer Ausführungsform der Erfindung ebenfalls dazu führen, dass das Fahrmanöver abgebrochen wird, da sich das Fahrzeug nun nicht mehr im berechneten Fahrschlauch bewegt.

Bei einem semiautomatischen Fahrmanöver wird das Fahrmanöver vorzugsweise dann abgebrochen, wenn der Fahrer einen Lenkhinweis missachtet und sich ein Objekt im Fahrschlauch, der voraussichtlich von Kraftfahrzeug durchfahren wird, befindet. Hierdurch wird vermieden, dass es zu einer Kollision mit dem Objekt kommt, wenn der Fahrer die Lenkhinweise des Systems missachtet.

Um die Umgebung des Kraftfahrzeugs während des Fahrmanövers zu erfassen, können beliebige Umfeldsensoren eingesetzt werden. Üblicherweise werden Abstandssensoren, beispielsweise Ultraschallsensoren, Radarsensoren, Infrarotsensoren oder Lidarsensoren eingesetzt. Alternativ ist es auch möglich, andere Videosensoren einzusetzen, und die Umfelderfassung in diesem Fall durch eine Bildverarbeitung zu realisieren.

Wenn bei der Erfassung der Umgebung des Kraftfahrzeugs ein Objekt im Fahrschlauch ermittelt wird, wird erfindungsgemäß ermittelt, ob ein Umfahren des Objekts möglich ist. Wenn ein Umfahren möglich ist, wird ein neuer Fahrschlauch unter Umfahrung des Objekts bestimmt und das Fahrmanöver so durchgeführt, dass das Kraftfahrzeug innerhalb des neuen Fahrschlauchs bewegt wird. Durch das Berechnen des neuen Fahrschlauchs wird ein dynamisches System erzielt, das das Fahrmanöver auch dann zum Ende bringt, wenn sich ein Objekt in den ursprünglich berechneten Fahrschlauch bewegt oder sich im ursprünglich berechneten Fahrschlauch befindet, was bei bekannten Systemen zum Abbruch geführt hätte. Lediglich wenn ein Umfahren des Objekts im Fahrschlauch nicht möglich ist, wird das Fahrmanöver beendet. Hierbei ist es auch möglich, dass zunächst vor dem endgültigen Abbruch des Fahrmanövers gewartet wird, ob sich das Objekt weiterbewegt und den Fahrschlauch verlässt oder in eine Richtung bewegt, die ein Umfahren des Objektes möglich macht. Erst wenn nach einer vorgegebenen

Zeitspanne ein Umfahren des Objektes nicht möglich ist oder sich das Objekt für einen vorgegebenen Zeitraum nicht bewegt, wird das Fahrmanöver endgültig abgebrochen. Der Zeitraum, der bis zum endgültigen Abbruch des Fahrmanövers abgewartet wird, kann zum Beispiel in einem Fahrassistenzsystem, das zur Durchführung des Verfahrens eingesetzt wird, vorgegeben sein. Alternativ ist es auch möglich, dass zum Beispiel ein entsprechender Zeitraum durch den Fahrer des Kraftfahrzeugs vorgegeben wird. Hierbei wird der Zeitraum bis zum endgültigen Abbruch vorzugsweise so gewählt, dass die Wartezeit bis zum endgültigen Abbruch durch den Fahrer nicht als unangenehm empfunden wird.

Eine erfindungsgemäße Vorrichtung zur Durchführung des Verfahrens umfasst Mittel zur Bestimmung eines Fahrschlauchs, in dem sich das Fahrzeug während es Fahrmanövers bewegt, Mittel zur Erfassung der Umgebung des Kraftfahrzeugs sowie Mittel zur automatischen oder semiautomatischen Durchführung des Fahrmanövers, wobei die Mittel zur automatischen oder semiautomatischen Durchführung des Fahrmanövers derart gestaltet sind, dass das Kraftfahrzeug angehalten wird, wenn ein Objekt im Fahrschlauch erfasst wird und das Fahrmanöver fortgesetzt wird, sobald das Objekt den Fahrschlauch verlassen hat und/oder das Kraftfahrzeug abgebremst wird und das Fahrmanöver langsam fortgesetzt wird, wenn ein Objekt außerhalb des Fahrschlauchs detektiert wird.

Die Mittel zur Bestimmung eines Fahrschlauchs, in dem sich das Kraftfahrzeug während des Fahrmanövers bewegt, umfassen im Allgemeinen einen Prozessor und ein Computerprogramm, mit dem anhand von Umfelddaten des Kraftfahrzeugs der Fahrschlauch, entlang dem das Fahrzeug während des Fahrmanövers bewegt wird, bestimmt wird. Hierzu lässt sich zum Beispiel ein übliches Steuergerät einsetzen, wie es für Fahrassistenzsysteme verwendet wird. Als Mittel zur Erfassung der Umgebung des Kraftfahrzeugs eignen sich zum Beispiel Ultraschallsensoren, Infrarotsensoren, Radarsensoren, Lidarsensoren oder andere wie Videosensoren.

### Kurze Beschreibung der Figuren

Ausführungsbeispiele der Erfindung sind in den Figuren dargestellt und werden in der nachfolgenden Beschreibung näher erläutert.

Es zeigen:
- Figur 1: eine schematische Darstellung eines Einparkmanövers,
- Figur 2: ein Flussdiagramm des erfindungsgemäßen Verfahrens.

### Ausführungsformen der Erfindung

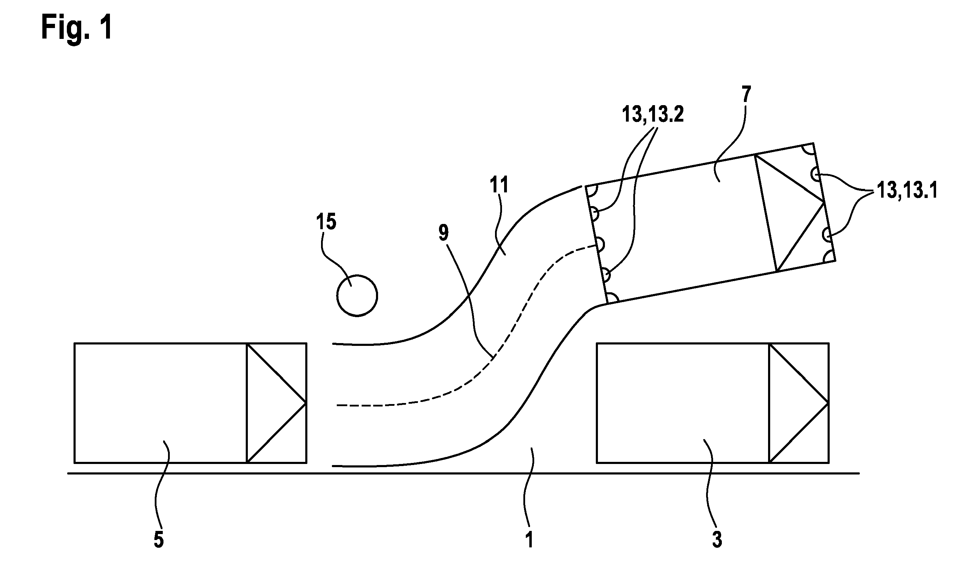

In Figur 1 ist schematisch ein Einparkmanöver in eine Längsparklücke dargestellt.

In der in Figur 1 dargestellten Situation ist eine Längsparklücke 1 von einem vorderen Fahrzeug 3 und einem hinteren Fahrzeug 5 begrenzt. Das Fahrmanöver, das von einem Kraftfahrzeug 7 durchgeführt wird, ist ein Einparkmanöver in die Längsparklücke 1, wobei das Kraftfahrzeug 7 rückwärts einparkt.

Um in die Längsparklücke 1 einzuparken, bewegt sich das Kraftfahrzeug 7 entlang einer Trajektorie 9. Die Fläche, die das Kraftfahrzeug 7 beim Einparken in die Längsparklücke 1 überstreicht wird als Fahrschlauch 11 bezeichnet.

Um den Fahrer beim Einparken des Kraftfahrzeugs 7 zu unterstützen, wird das Einparkmanöver in die Längsparklücke 1 automatisch oder semiautomatisch durchgeführt. Hierzu wird zunächst bei der Vorbeifahrt an der Längsparklücke 1 die Längsparklücke 1 vermessen und anhand der Daten die Trajektorie 9 berechnet.

Zur Vermessung der Längsparklücke 1 wird die Umgebung des Kraftfahrzeugs 7 während der Vorbeifahrt erfasst. Hierzu werden Sensoren 13 eingesetzt. Um die Umgebung erfassen zu können, weist das Fahrzeug Frontsensoren 13.1 im Frontbereich und Hecksensoren 13.2 im Heckbereich auf. Mit den Frontsensoren 13.1 wird die Umgebung vor dem Kraftfahrzeug und mit den Hecksensoren 13.2 hinter dem Kraftfahrzeug erfasst.

Die Sensoren 13, die zur Erfassung der Umgebung eingesetzt werden, sind üblicherweise Abstandssensoren, beispielsweise Ultraschallsensoren, Infrarotsensoren, Radarsensoren oder Lidarsensoren oder es werden optische Sensoren, beispielsweise Kameras eingesetzt. Bei Abstandssensoren wird vom Sensor ein Signal gesendet und ein von einem Objekt reflektiertes Echo des Signals empfangen. Aus der Laufzeit zwischen Senden des Signals und Empfangen des Echos und der Ausbreitungsgeschwindigkeit des Signals wird der Abstand zu dem Objekt bestimmt. Um die Richtung zu erfassen, werden mindestens zwei Sensoren benötigt, wobei sich das Objekt am Schnittpunkt der Entfernungssignale der Sensoren befindet. Bei Verwendung einer Kamera erfolgt die Erfassung durch Bildverarbeitung.

Nach Bestimmung der Trajektorie, die in einem geeigneten Steuergerät berechnet wird, kann auch der Fahrschlauch 11 bestimmt werden. Die Grenzen des Fahrschlauchs werden dabei bei einer Rechtskurve durch die hintere linke Ecke und die vordere rechte Ecke des Fahrzeugs bestimmt und bei einer Linkskurve durch die vordere linke Ecke und die hintere rechte Ecke des Kraftfahrzeugs 7.

Nach der Bestimmung des Fahrschlauches 11 und der Trajektorie 9 kann das Fahrmanöver durchgeführt werden. Hierbei ist es entweder möglich, das Fahrmanöver semiautomatisch durchzuführen oder das Fahrmanöver automatisch durchzuführen.

Bei einer semiautomatischen Durchführung des Fahrmanövers übernimmt der Fahrer des Kraftfahrzeugs 7 die Längsführung, das heißt Bremsen und Beschleunigen des Fahrzeugs und die Querführung, das heißt Lenkbewegungen werden von einem Fahrassistenzsystem, mit dem das Verfahren umgesetzt wird, automatisch durchgeführt. Alternativ ist es auch möglich, dass die Längsführung durch das Fahrzeug übernommen wird und dem Fahrer des Kraftfahrzeugs 7 Hinweise zu notwendigen Lenkbewegungen zur Durchführung des Fahrmanövers gegeben werden. Die Hinweise zur Durchführung der Lenkbewegungen können dabei zum Beispiel optisch, akustisch oder haptisch gegeben werden. Bei akustischen Hinweisen ist es zum Beispiel möglich, den Fahrer durch eine geeignete Sprachausgabe anzuleiten, wie er das Fahrzeug zu lenken hat. Bei einer optischen Anzeige ist es zum Beispiel möglich mit geeigneten Pfeildarstellungen die erforderlichen Lenkeinschläge anzuzeigen. Ein haptisches System ermöglicht es zum Beispiel durch Aufbringen eines Momentes an das Lenkrad den Fahrer dazu zu bewegen, das Lenkrad mit dem geringsten Kraftaufwand zu bewegen, so dass das Fahrmanöver durchgeführt wird, als ob sich das Kraftfahrzeug 7 in einer Spurrille bewegt.

Bei einem automatisch durchgeführten Fahrmanöver sowohl Längsführung als auch Querführung des Kraftfahrzeugs 7 vom Fahrassistenzsystem übernommen.

Zur Übernahme der Längsführung ist es zum Beispiel möglich, dass durch ein geeignetes Steuergeräte Signale an die Kraftstoffversorgung des Motors beziehungsweise an die Bremsanlage gesendet werden und das Fahrzeug entsprechend beschleunigt oder abgebremst wird. Zur Durchführung der Querführung ist es zum Beispiel möglich, dass durch einen geeigneten Stellmotor die lenkbaren Räder des Kraftfahrzeugs 7 in die Richtung ausgerichtet werden, in die das Kraftfahrzeug 7 bewegt werden soll.

Während der Durchführung des Fahrmanövers wird weiterhin die Umgebung des Kraftfahrzeugs mit den Sensoren 13, 13.1, 13.2 erfasst. Insbesondere wird hierbei geprüft, ob sich ein Objekt 15 in der Nähe des Fahrschlauchs befindet. Wenn sich ein Objekt 15 in der Nähe des Fahrschlauchs 11 befindet, wird die Geschwindigkeit, mit der das Fahrmanöver durchgeführt wird, reduziert. Wenn sich das Objekt 15 in den Fahrschlauch 11 bewegt, wird das Kraftfahrzeug 7 angehalten und das Fahrmanöver unterbrochen, um eine Kollision mit dem Objekt 15 zu vermeiden. Wenn sich das Objekt 15 weiterbewegt und den Fahrschlauch wieder verlässt, kann das Fahrmanöver fortgeführt werden. Lediglich dann, wenn sich das Objekt 15 nicht mehr aus dem Fahrschlauch 11 bewegt, wird das Fahrmanöver abgebrochen. Alternativ ist es auch möglich, wenn sich ein Objekt 15 im Fahrschlauch 11 befindet, dass zunächst geprüft wird, ob es möglich ist, das Objekt 15 zu umfahren, indem eine neue Trajektorie berechnet wird und der Fahrschlauch, der sich dann ergibt, so liegt, dass das Objekt 15 sich nicht mehr im Fahrschlauch befindet. In diesem Fall kann durch ein Umfahren des Objektes 15 das Fahrmanöver fortgeführt werden.

Objekte 15, die das Fahrmanöver unterbrechen können, und die sich im Fahrschlauch 11 oder in der Nähe des Fahrschlauches 11 befinden können, sind zum Beispiel unbewegliche Objekte wie Pfosten, Blumenkübel, Mauern, Wände oder andere Fahrzeuge oder auch bewegliche Hindernisse, beispielsweise Spielzeuge wie Bälle oder Ähnliches, oder andere Verkehrsteilnehmer, wie Fußgänger, Fahrradfahrer, Kraftradfahrer oder andere am Verkehr teilnehmende Kraftfahrzeuge.

Neben einem Einparkmanöver in eine Längsparklücke, wie es in Figur 1 dargestellt ist, kann das erfindungsgemäße Verfahren auch für beliebige andere Fahrmanöver, die vorzugsweise mit geringer Geschwindigkeit durchgeführt werden, eingesetzt werden. Andere Fahrmanöver sind zum Beispiel Rangierfahrten, Einparkmanöver in eine Querparklücke, wobei das Einparkmanöver vorwärts oder rückwärts durchgeführt werden kann, ein Vorwärtseinparken in eine Längsparklücke, oder auch Fahrten um enge Kurven, beispielsweise in einem Parkhaus.

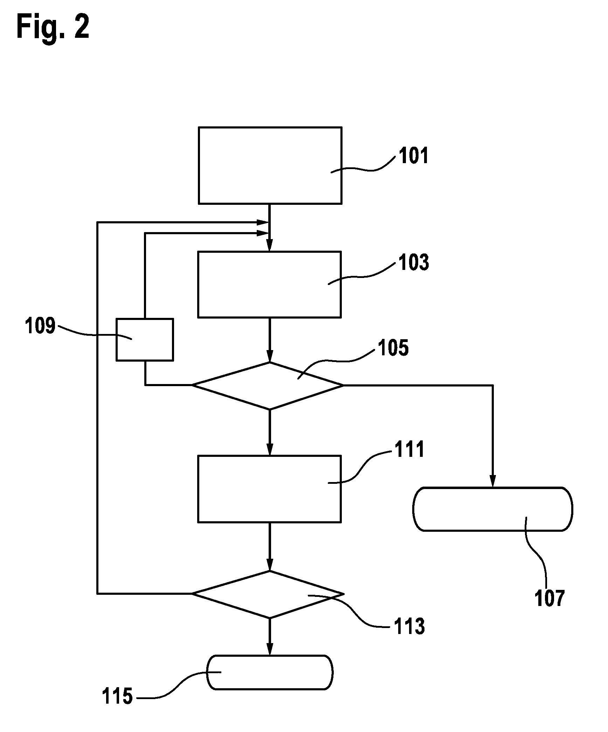

Zur weiteren Erläuterung ist in Figur 2 das erfindungsgemäße Verfahren in Form eines Flussdiagramms dargestellt.

In einem ersten Schritt 101 wird der Fahrschlauch 11 bestimmt. Hierzu wird zum Beispiel zunächst eine Trajektorie berechnet, entlang der das Fahrmanöver durchgeführt wird. Die Trajektorie ist dabei üblicherweise der Weg, den der Mittelpunkt der Hinterachse des Kraftfahrzeugs 7 zurücklegt. Alternativ zum Mittelpunkt der Hinterachse ist jedoch auch jeder beliebige andere Punkt des Fahrzeugs als Referenzpunkt für die Trajektorie denkbar. So kann zum Beispiel auch der Mittelpunkt der Vorderachse, der Mittelpunkt des Fahrzeugs, oder ein Eckpunkt des Fahrzeugs für die Bestimmung der Trajektorie gewählt werden.

Der Fahrschlauch, der im ersten Schritt 101 bestimmt wird, ist der Bereich, der während des Fahrmanövers vom Kraftfahrzeug 7 überstrichen wird und wird üblicherweise jeweils durch die äußersten Ecken des Kraftfahrzeuges definiert.

Nach der Bestimmung des Fahrschlauchs im ersten Schritt 101 wird in einem zweiten Schritt 103 während der Durchführung des Fahrmanövers die Umgebung erfasst. Die Erfassung der Umgebung erfolgt dabei mit geeigneten Sensoren, die am Kraftfahrzeug 7 ausgebildet sind. Üblicherweise werden, wie bereits vorstehend erwähnt, Abstandssensoren, beispielsweise Ultraschallsensoren, Lidarsensoren, Infrarotsensoren oder Radarsensoren verwendet. Alternativ ist es auch möglich, andere optische Sensoren, beispielsweise Videokameras einzusetzen.

In einem nächsten Schritt 105 wird geprüft, ob beim Erfassen der Umgebung in Schritt 103 ein Objekt detektiert worden ist. Wenn im Schritt 105 kein Objekt gefunden wird, wird mit einem nächsten Schritt 107 das Fahrmanöver fortgesetzt.

Wenn im dritten Schritt 105 ein Objekt 15 in der Nähe des Fahrschlauches 11 detektiert wird, wird das Kraftfahrzeug in einem Schritt 109 abgebremst und das Fahrmanöver mit einer geringeren Geschwindigkeit fortgeführt. Hierzu wird zurück zu Schritt 103 gegangen und weiterhin die Umgebung des Fahrzeugs erfasst und auf Objekte geprüft. Hierbei wird insbesondere weiterhin überwacht, ob sich das außerhalb des Fahrschlauchs detektierte Objekt bewegt und zum Beispiel in Richtung des Fahrschlauchs bewegt oder ob es sich um ein starres Objekt außerhalb des Fahrschlauches handelt.

Wenn in Schritt 105 ein Objekt detektiert wird, das sich im Fahrschlauch 11 befindet, wird in einem nachfolgenden Schritt 111 das Fahrmanöver unterbrochen. Hierzu wird das Kraftfahrzeug 7 zunächst angehalten. Durch das Anhalten des Kraftfahrzeugs 7 wird vermieden, dass es zu einer Kollision mit dem Objekt 15 kommt.

An den Schritt 111, in dem das Fahrmanöver unterbrochen wird, schließt sich ein weiterer Schritt 113 an, in dem überprüft wird, ob sich das Objekt weiterhin im Fahrschlauch befindet. Wenn nach einer vorgegebenen Zeit, die beispielsweise durch den Fahrer des Kraftfahrzeugs vorgegeben werden kann und in einem Fahrassistenzsystem, mit dem Verfahren durchgeführt wird, abgelegt ist, das Objekt 15 weiterhin im Fahrschlauch 11 ist, wird das Fahrmanöver in einem abschließenden Schritt 115 endgültig abgebrochen. Wenn sich das Objekt bewegt, wird das Objekt 15 weiter beobachtet und erfasst, wohin sich das Objekt bewegt. Wenn sich das Objekt aus dem Fahrschlauch bewegt hat, wird das Fahrmanöver fortgesetzt, indem die Umgebung weiter erfasst wird und das Fahrzeug wieder beschleunigt wird, um das Fahrmanöver abzuschließen.

In einer weiteren Ausgestaltung ist es auch möglich, dass bei Auffinden eines Objekts im Schritt 105 das Fahrmanöver nicht unterbrochen wird, sondern eine alternative Trajektorie berechnet wird, mit der das Objekt umfahren werden kann. Nur wenn das Umfahren des Objekts nicht möglich ist, wird das Fahrmanöver unterbrochen oder dann auch abgebrochen.

Durch die Neuberechnung einer Trajektorie bei Erfassen eines Objekts im Fahrschlauch beziehungsweise das Unterbrechen des Fahrmanövers und anschließendes Fortsetzen wird dem Fahrer eine verbesserte Unterstützung zuteil. Auch bei Detektion eines Objekts, das sich in der Nähe des Fahrschlauchs oder im Fahrschlauch befindet ist es möglich, das Fahrmanöver entweder auf einer alternativen Route oder nachdem das Objekt den Fahrschlauch verlassen hat, fortzuführen.

## Patentansprüche

1. Verfahren zur Unterstützung eines Fahrers eines Kraftfahrzeugs (7) bei einem Fahrmanöver, folgende Schritte umfassend:
a) Bestimmung eines Fahrschlauchs (11), in dem sich das Kraftfahrzeug (7) während der Durchführung des Fahrmanövers bewegt und automatisches oder semiautomatisches Durchführen des Fahrmanövers,
b) Erfassen der Umgebung des Kraftfahrzeugs (7) während des Fahrmanövers,
c) Abbremsen des Kraftfahrzeugs und langsames Fortsetzen des Fahrmanövers, wenn ein Objekt (15) außerhalb des Fahrschlauchs (11) detektiert wird, wobei erkannt wird, ob sich das außerhalb des Fahrschlauchs (11) detektierte Objekt (15) in Richtung des Fahrschlauchs (11) bewegt oder ein starres Objekt (15) ist und Anhalten des Kraftfahrzeugs, wenn das Objekt (15) im Fahrschlauch (11) erfasst wird **gekennzeichnet durch**
Fortsetzen des Fahrmanövers, sobald das Objekt (15) den Fahrschlauch (11) verlassen hat, wobei
bei Erfassung eines Objektes (15) im Fahrschlauch (11) ermittelt wird, ob ein Umfahren des Objekts (15) möglich ist, und wenn ein Umfahren möglich ist, ein neuer Fahrschlauch (11) unter Umfahrung des Objekts (15) bestimmt wird und das Fahrmanöver so durchgeführt wird, dass das Kraftfahrzeug (7) innerhalb des neuen Fahrschlauchs bewegt wird.

2. Verfahren gemäß Anspruch 1, **dadurch gekennzeichnet, dass** das automatisch durchgeführte Fahrmanöver abgebrochen wird, sobald der Fahrer des Kraftfahrzeugs (7) das Fahrpedal betätigt.

3. Verfahren gemäß Anspruch 1 oder 2, **dadurch gekennzeichnet, dass** der Fahrer des Kraftfahrzeugs (7) die Geschwindigkeit des Kraftfahrzeugs (7) jederzeit verringern kann, ohne dass das Fahrmanöver abgebrochen wird.

4. Verfahren gemäß einem der Ansprüche 1 bis 3, **dadurch gekennzeichnet, dass** bei einem semiautomatischen Durchführen des Fahrmanövers die Längsführung automatisch erfolgt und der Fahrer des Kraftfahrzeugs (7) Hinweise zur Querführung erhält.

5. Verfahren gemäß Anspruch 4, **dadurch gekennzeichnet, dass** die Hinweise zur Querführung haptische Lenkhinweise sind.

6. Verfahren gemäß einem der Ansprüche 1 bis 5, **dadurch gekennzeichnet, dass** zur Erfassung der Umgebung des Kraftfahrzeugs (7) während des Fahrmanövers Ultraschallsensoren, Radarsensoren, Infrarotsensoren, Lidarsensoren oder andere Videosensoren verwendet werden.

7. Verfahren gemäß Anspruch 6, **dadurch gekennzeichnet, dass** das Fahrmanöver beendet wird, wenn ein Umfahren des Objekts (15) im Fahrschlauch (11) nicht möglich ist.

8. Verfahren gemäß einem der Ansprüche 1 bis 7, **dadurch gekennzeichnet, dass** das Fahrmanöver abgebrochen wird, wenn der Fahrer bei einem semiautomatischen Fahrmanöver einen Lenkhinweis missachtet und sich ein Objekt (15) im Fahrschlauch (11), der voraussichtlich vom Kraftfahrzeug (7) durchfahren wird, befindet.

9. Vorrichtung zur Durchführung des Verfahrens gemäß einem der Ansprüche 1 bis 8, umfassend Mittel zur Bestimmung eines Fahrschlauchs (11), in dem sich das Kraftfahrzeug (7) während des Fahrmanövers bewegt, Mittel zur Erfassung der Umgebung des Kraftfahrzeugs (7) sowie Mittel zur automatischen oder semiautomatischen Durchführung des Fahrmanövers, wobei die Mittel zur automatischen oder semiautomatischen Durchführung des Fahrmanövers derart gestaltet sind, dass das Kraftfahrzeug (7) abgebremst wird und das Fahrmanöver langsam fortgesetzt wird, wenn ein Objekt (15) außerhalb des Fahrschlauchs (11) detektiert wird, wobei erkannt wird, ob sich das Objekt (15) in Richtung des Fahrzeugschlauchs (11) bewegt oder ein starres Objekt (15) ist und das Kraftfahrzeug (7) angehalten wird, wenn das Objekt (15) im Fahrschlauch (11) erfasst wird und das Fahrmanöver fortgesetzt wird, sobald das Objekt (15) den Fahrschlauch (11) verlassen hat, **dadurch gekennzeichnet, dass**
bei Erfassung eines Objektes (15) im Fahrschlauch (11) ermittelt wird, ob ein Umfahren des Objekts (15) möglich ist, und wenn ein Umfahren möglich ist, ein neuer Fahrschlauch (11) unter Umfahrung des Objekts (15) bestimmt wird und das Fahrmanöver so durchgeführt wird, dass das Kraftfahrzeug (7) innerhalb des neuen Fahrschlauchs bewegt wird.

10. Vorrichtung gemäß Anspruch 9, **dadurch gekennzeichnet, dass** die Mittel zur Erfassung der Umgebung des Kraftfahrzeugs (7) Ultraschallsensoren, Infrarotsensoren, Radarsensoren, Lidarsensoren oder andere Videosensoren umfassen.

## Claims

1. Method for assisting a driver of a motor vehicle (7) during a driving manoeuvre, comprising the following steps:
(a) determining a driving tube (11) in which the motor vehicle (7) moves during the execution of the driving manoeuvre, and automatic or semi-automatic execution of the driving manoeuvre,
(b) sensing the surroundings of the motor vehicle (7) during the driving manoeuvre,
(c) braking the motor vehicle and slowly continuing the driving manoeuvre if an object (15) is detected outside the driving tube (11), wherein it is determined whether the object (15) which is detected outside the driving tube (11) is moving in the direction of the driving tube (11) or is a rigid object (15), and stopping the motor vehicle if the object (15) is sensed in the driving tube (11), **characterized by** continuing the driving manoeuvre as soon as the object (15) has left the driving tube (11), wherein when an object (15) is sensed in the driving tube (11) it is determined whether it is possible to drive around the object (15), and if it is possible to drive around, a new driving tube (11) is determined by driving around the object (15), and the driving manoeuvre is carried out in such a way that the motor vehicle (7) is moved within the new driving tube.

2. Method according to Claim 1, **characterized in that** the driving manoeuvre which is executed automatically is aborted as soon as the driver of the motor vehicle (7) activates the accelerator pedal.

3. Method according to Claim 1 or 2, **characterized in that** the driver of the motor vehicle (7) can reduce the speed of the motor vehicle (7) at any time without aborting the driving manoeuvre.

4. Method according to one of Claims 1 to 3, **characterized in that** in the case of semi-automatic execution of the driving manoeuvre the longitudinal guidance is carried out automatically and the driver of the motor vehicle (7) receives instructions about lateral guidance.

5. Method according to Claim 4, **characterized in that** the instructions for lateral guidance are haptic steering instructions.

6. Method according to one of Claims 1 to 5, **characterized in that** ultrasonic sensors, radar sensors, infrared sensors, lidar sensors or other video sensors are used to sense the surroundings of the motor vehicle (7) during the driving manoeuvre.

7. Method according to Claim 6, **characterized in that** the driving manoeuvre is ended if it is not possible to drive around the object (15) in the driving tube (11).

8. Method according to one of Claims 1 to 7, **characterized in that** the driving manoeuvre is aborted if, during a semi-automatic driving manoeuvre, the driver disregards a steering instruction and an object (15) is located in the driving tube (11) through which the motor vehicle (7) is expected to drive.

9. Device for executing the method according to one of Claims 1 to 8, comprising means for determining a driving tube (11) in which the motor vehicle (7) moves during the driving manoeuvre, means for sensing the surroundings of the motor vehicle (7) and means for automatic or semi-automatic execution of the driving manoeuvre, wherein the means for automatic or semi-automatic execution of the driving manoeuvre are configured in such a way that the motor vehicle (7) is braked and the driving manoeuvre is slowly continued if an object (15) is detected outside the driving tube (11), wherein it is determined whether the object (15) is moving in the direction of the driving tube (11) or is a rigid object (15), and the motor vehicle (7) is stopped if the object (15) is sensed in the driving tube (11) and the driving manoeuvre is continued as soon as the object (15) has left the driving tube (11), **characterized in that**
when an object (15) is sensed in the driving tube (11) it is determined whether it is possible to drive around the object (15) and if driving around is possible, a new driving tube (11) is determined by driving around the object (15) and the driving manoeuvre is carried out in such a way that the motor vehicle (7) is moved inside the new driving tube.

10. Device according to Claim 9, **characterized in that** the means for sensing the surroundings of the motor vehicle (7) comprise ultrasonic sensors, infrared sensors, radar sensors, lidar sensors or other video sensors.

## Revendications

1. Procédé d'assistance d'un conducteur d'un véhicule automobile (7) lors d'une manoeuvre de conduite, comprenant les étapes suivantes :
a) définition d'un couloir de conduite (11) dans lequel se déplace le véhicule automobile (7) pendant l'exécution de la manoeuvre de conduite et exécution automatique ou semi-automatique de la manoeuvre de conduite,
b) détection de l'environnement du véhicule automobile (7) pendant la manoeuvre de conduite,
c) freinage du véhicule automobile et poursuite lente de la manoeuvre de conduite lorsqu'un objet (15) est détecté en-dehors du couloir de conduite (11), une reconnaissance ayant ici lieu si l'objet (15) détecté en-dehors du couloir de conduite (11) se déplace en direction du couloir de conduite (11) ou s'il s'agit d'un objet (15) fixe et arrêt du véhicule automobile lorsque l'objet (15) est détecté dans le couloir de conduite (11),
**caractérisé par**
poursuite de la manoeuvre de conduite dès que l'objet (15) a quitté le couloir de conduite (11),
lors de la détection d'un objet (15) dans le couloir de conduite (11), une détermination ayant lieu pour savoir s'il est possible de contourner l'objet (15) et, lorsqu'un contournement est possible, un nouveau couloir de conduite (11) en contournant l'objet (15) est défini et la manoeuvre de conduite est exécutée de telle sorte que le véhicule automobile (7) est déplacé à l'intérieur du nouveau couloir de conduite.

2. Procédé selon la revendication 1, **caractérisé en ce que** l'exécution automatique de la manoeuvre de conduite est interrompue dès que le conducteur du véhicule automobile (7) actionne la pédale d'accélérateur.

3. Procédé selon la revendication 1 ou 2, **caractérisé en ce que** le conducteur du véhicule automobile (7) peut à tout moment réduire la vitesse du véhicule automobile (7) sans que la manoeuvre de conduite soit interrompue.

4. Procédé selon l'une des revendications 1 à 3, **caractérisé en ce que** lors de l'exécution semi-automatique de la manoeuvre de conduite, le guidage longitudinal est effectué automatiquement et le conducteur du véhicule automobile (7) reçoit des consignes à propos du guidage transversal.

5. Procédé selon la revendication 4, **caractérisé en ce que** les consignes à propos du guidage transversal sont des consignes de direction sensorielles.

6. Procédé selon l'une des revendications 1 à 5, **caractérisé en ce que** des capteurs à ultrasons, des capteurs radar, des capteurs à infrarouges, des capteurs lidar ou d'autres capteurs vidéo sont utilisés pour la détection de l'environnement du véhicule automobile (7) pendant la manoeuvre de conduite.

7. Procédé selon la revendication 6, **caractérisé en ce qu'**il est mis fin à la manoeuvre de conduite lorsqu'un contournement de l'objet (15) dans le couloir de conduite (11) est impossible.

8. Procédé selon l'une des revendications 1 à 7, **caractérisé en ce que** la manoeuvre de conduite est interrompue lorsque le conducteur, lors d'une manoeuvre de conduite semi-automatique, n'observe pas une consigne de direction et qu'un objet (15) se trouve dans le couloir de conduite (11) qui sera probablement traversé par le véhicule automobile (7).

9. Dispositif pour mettre en oeuvre le procédé selon l'une des revendications 1 à 8, comprenant des moyens de définition d'un couloir de conduite (11) dans lequel se déplace le véhicule automobile (7) pendant l'exécution de la manoeuvre de conduite, des moyens de détection de l'environnement du véhicule automobile (7) ainsi que des moyens d'exécution automatique ou semi-automatique de la manoeuvre de conduite, les moyens d'exécution automatique ou semi-automatique de la manoeuvre de conduite étant configurés de telle sorte que le véhicule automobile (7) est freiné et la manoeuvre de conduite est poursuivie lentement lorsqu'un objet (15) est détecté en-dehors du couloir de conduite (11), une reconnaissance ayant ici lieu si l'objet (15) se déplace en direction du couloir de conduite (11) ou s'il s'agit d'un objet (15) fixe et le véhicule automobile (7) étant arrêté lorsque l'objet (15) est détecté dans le couloir de conduite (11) et la manoeuvre de conduite étant poursuivie dès que l'objet (15) a quitté le couloir de conduite (11), **caractérisé en ce que**
lors de la détection d'un objet (15) dans le couloir de conduite (11), une détermination a lieu pour savoir s'il est possible de contourner l'objet (15) et, lorsqu'un contournement est possible, un nouveau couloir de conduite (11) en contournant l'objet (15) est défini et la manoeuvre de conduite est exécutée de telle sorte que le véhicule automobile (7) est déplacé à l'intérieur du nouveau couloir de conduite.

10. Dispositif selon la revendication 9, **caractérisé en ce que** les moyens de détection de l'environnement du véhicule automobile (7) comprennent des capteurs à ultrasons, des capteurs à infrarouges, des capteurs radar, des capteurs lidar ou d'autres capteurs vidéo.
